# EUROPEAN PATENT SPECIFICATION

(11) **EP 0 472 379 B1**
(45) Date of publication and mention of the grant of the patent: **22.03.1995**
(21) Application number: 91307587.5
(22) Date of filing: 16.08.1991
(51) Int. Cl.: F16L 21/04, F16L 27/10

(54) **Pipe couplings**
Rohrkupplungen
Raccords pour tuyaux

(30) Priority: 23.08.1990 GB 9018546
(43) Date of publication of application: 26.02.1992
(73) Proprietor: VICTAULIC PLC, Hitchin Hertfordshire SG4 0AP (GB)
(72) Inventor: Harper, Brian, Hitchin, Hertfordshire (GB); Davis, Francis Walter, Hitchin, Hertfordshire (GB)
(74) Representative: Heath, Peter William Murray

(56) References cited:
- GB-A- 690 557
- US-A- 2 853 318
- US-A- 2 901 274

## Description

This invention relates to pipe couplings and more particularly to pipe couplings of the kind adapted to connect together a plain ended pipe to another pipe.

It is to be understood that the expression "pipe" as used herein means pipes and tubes as such and also pipe-like members and fittings for use in pipework such as bends, elbows, "T" connectors, and parts and devices adapted to be fitted to pipework, such as valves and pumps.

Pipe couplings of the kind referred to above commonly comprise an annular sleeve member for overlying the end of the plain ended pipe, a sealing gasket disposed in use in an annular disposition at one end of the sleeve member about the plain ended pipe, an annular compression flange disposed about the one end of the sleeve and arranged to be axially drawn against the sealing gasket by tightening means to cause the sealing gasket to be forced into sealing contact between the sleeve member and the outer periphery of the plain ended pipe located within the sleeve.

Such pipe couplings can be formed, for example, predominantly of malleable irons, steel, or plastics materials.

Pipe couplings of this kind are often used for connecting two abutting plain ended pipes, in which case sealing gaskets and compression flanges are provided at both ends of the sleeve member, and the tightening means usually connect between the two flanges.

The pairs of compression flanges for such couplings are commonly connected together by tightening means comprising bolts passing along the length of the sleeve and through apertures spaced around the outer radial extremity of the flanges, such bolts being provided with a head at one end and carrying a nut at the other so that the flanges are drawn together by tightening of the nuts on the bolts. Radially inwardly of the apertures for the tightening means, each of the compression flanges is commonly provided with a radially extending annular skirt portion arranged in use to abut against the axially outer face of the associated sealing gasket, and an axially inwardly extending annular collar portion surrounding the radially outer face of the sealing gasket and of the end of the sleeve members. The skirt and collar portions cooperate to contain the sealing gaskets during compression thereof, and the collar portion contributes to the stiffness of the flange.

Such an overall configuration of flange suffers from disadvantages. Firstly it occupies, in relation to the pipes it is connecting, an excessive radial space, so that the presence of such couplings along pipework provides a maximum outside diameter of the pipework considerably greater than the pipes themselves. Secondly, with the provision of engagement of the tightening means at radially outer parts of such flanges, excessive tightening can result in distortion of the flanges, and even in exceptional cases fracture thereof. Additionally, the largeness of such a coupling inevitably involves a considerable mass of material with attendant weight and cost disadvantages.

US-A-2853318 discloses a pipe coupling having an annular sleeve member, an annular sealing gasket, and an annular compression flange, wherein the flange includes a radially inwardly extending skirt portion arranged to abut on its axially inner wall against an axially outer face of the sealing gasket, and an axially inwardly extending collar portion running around the flange radially outwardly of the skirt portion so as to be adjacent, on its radially inner wall, a radially outer face of the sealing gasket, the skirt portion having a plurality of radially outward extensions spaced therearound. Such an arrangement has the disadvantages set out in the preceeding paragraph.

It is an object of the present invention to overcome or at least substantially reduce the disadvantages mentioned hereinabove.

In accordance with the present invention there is provided a pipe coupling comprising an annular sleeve member arranged in use at at least a free end thereof to overlie an end of a plain ended pipe to be connected by the coupling; an annular sealing gasket disposed at the free end of the sleeve member and arranged in use to be compressed and seal between the inner wall of the sleeve and the outer peripheral wall of the pipe to be connected; an annular compression flange disposed at the free end of the sleeve member, the flange including a radially inwardly extending skirt portion arranged to abut on its axially inner wall against an axially outer face of the sealing gasket, and an axially inwardly extending collar portion running around the flange radially outwardly of the skirt portion so as to lie, on its radially inner wall, at an adjacent disposition to a radially outer face of the sealing gasket over the majority of its circumference, the skirt portion having a plurality of radially outward extensions spaced therearound, and tightening means connecting to the radially outward extensions of the skirt portion for compressing, in use, the sealing gasket between the sleeve member and the pipe to be connected, the tightening means being disposed at the plurality of radially outward extensions of the skirt portion, characterised in that the adjacent disposition of the collar portion and the sealing gasket is interrupted at the radially outward extensions of the skirt portion and in that the tightening means at the plurality of radially outward extensions of the skirt portion are disposed adjacent to the radially outer face of the sealing gasket.

In a preferred embodiment the axially extending collar portion of the compression flange is arranged to run around the radially outward extensions of the skirt portion, such that the tightening means are disposed radially within the collar portion at their connection with the skirt portion extensions.

The coupling of the invention may be provided for connecting two abutting plain ended pipes, and may include compression flanges and sealing gaskets at each end of the sleeve member, the tightening means connecting between the two compression flanges.

By means of the invention it will be seen that there is provided a coupling which has the capability of disposing the tightening means (such as nuts and bolts) on a smaller diameter about the coupling axis compared with similar previous couplings since they can be disposed closely adjacent the radially outer surface of the sealing gasket. This has the effect of reducing the radial dimensions of the coupling, and therefore potentially reducing the mass and weight and cost of the coupling, as well as reducing, since the moments are less, any tendency under strong tightening forces to distort the flange.

Another disadvantage of previous couplings of the kind referred to above is that when dealing with pipes having diameters spanning the full manufacturing outside diameter tolerance range, the coupling flanges have to have an inner skirt portion opening capable of accommodating maximum pipe diameters, so that at the minimum pipe diameter pipe there can be an appreciable gap between the skirt portion opening and the pipe wall, which is often made larger on one side because in this situation the pipe can tend to move offset to the coupling. In these circumstances, the resilient sealing gasket arranged to be sealed upon the outside periphery of the pipe and the inner surface of the sleeve, is often, in part at least, engaged only at the radially very outer part of its axially outer face by the skirt portion of the flange, and has a tendency when compressed to extrude axially outwardly through the gap between the pipe being connected and the skirt portion of the flange particularly on the larger gap side, causing seal failure of the connection.

In a particular embodiment of the invention, this disadvantage is overcome or at least substantially reduced. Thus the sealing gasket at each end is provided on its axially outer wall with an annular groove part way along its radial width, whereby in use with a pipe of small diameter in the tolerance range therefor, the radially outer portion of the axially outer rear wall of the gasket only is engaged by the skirt portion of the flange during tightening of the flange and compression of the gasket between the inner surface of the sleeve and the outer periphery of the pipe.

The groove in the axially outer wall of the sealing gasket may, in a preferred embodiment, be of a V-shape configuration whereby in section the axially outer wall of the gasket is of generally fishtail configuration.

By means of the just mentioned particular embodiment of the present invention there is provided a coupling which, even with pipes of a small diameter corresponding to the low tolerance end of the tolerance range of pipes of a nominal size, can safely be fitted around and tightened thereupon with the gasket sealing between the sleeve and the outer periphery of the pipe by engagement upon the radially outer portion of the axially outer wall of the gasket only, so as to provide good compressive force upon the gasket, about the pipe and assist and centralise the pipe within the coupling. In addition, the radially inner portion of the axially outer wall of the gasket tends to protrude into the gap between the skirt portion of the flange and the pipe, again assisting centralisation of the pipe within the coupling. Both of these effects reduce the risk most significantly of extrusion of the gasket through the gap between the skirt portion of the flange and the outer periphery of the pipe.

In order that the invention may be more readily understood one embodiment thereof will now be described by way of example with reference to the accompanying drawings in which:-
Figure 1 is a part sectional side elevation of a pipe coupling in accordance with the invention showing its fitting about pipes of the same nominal size but at opposite ends of the manufacturing outside diameter tolerance range, the part section being on the line I-I of Figure 2;
Figure 2 is an end elevation of a compression flange of the coupling of Figure 1;
Figure 3 is a part sectional elevation of the pipe coupling of Figure 1 on the line III-III of Figure 2; and
Figure 4 is a pipe flange adaptor coupling incorporating the present invention.

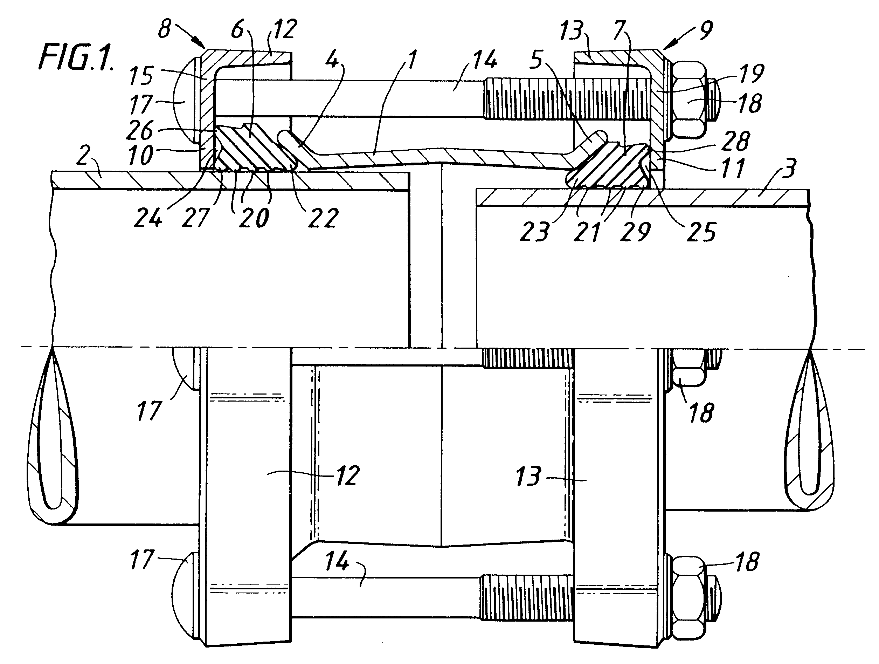

Referring now to Figures 1 to 3 of the drawings it is to be seen that the pipe coupling therein illustrated comprises an annular sleeve 1 formed of malleable iron surrounding the adjacent ends of two plain ended pipes 2,3, one of which, 2, is at maximum outside diameter for the nominal pipe size concerned, whilst the other of which, 3, is at minimum outside diameter for such size.

It is to be noted that the sleeve is provided at each end with a radially outwardly inclined portion 4,5, and that located radially inwardly within such portion at each end is a sealing gasket 6,7 of elastomeric material fitting around the respective pipe. It is to be observed that, naturally, the gasket 7 surrounding the small pipe 3 locates when in an uncompressed condition further axially within the sleeve 1 than the gasket around the large pipe.

Disposed axially outwardly of each sealing gasket 6,7 is a compression flange 8,9 of malleable iron which essentially comprises a radially inwardly extending skirt portion 10,11 and an axially inwardly extending collar portion 12,13.

The compression flanges 8,9 are connected together by means of four steel bolts 14 passing through appropriate shaped apertures 16 in radially outward extensions 15,19 of the skirt portions 10,11 of the flanges, the heads 17 of the bolts 14 bearing against the radially outer side of the skirt portion extension 15 of one of the flanges 8, whilst steel nuts 18 are positioned on the threaded bolts and bear against the axially outer side of the skirt portion extension 19 of the other flange 9.

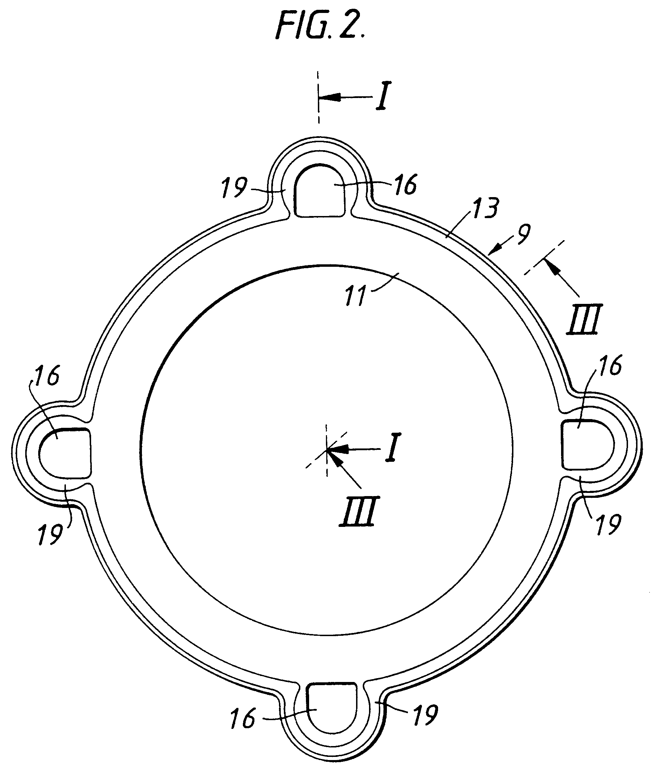

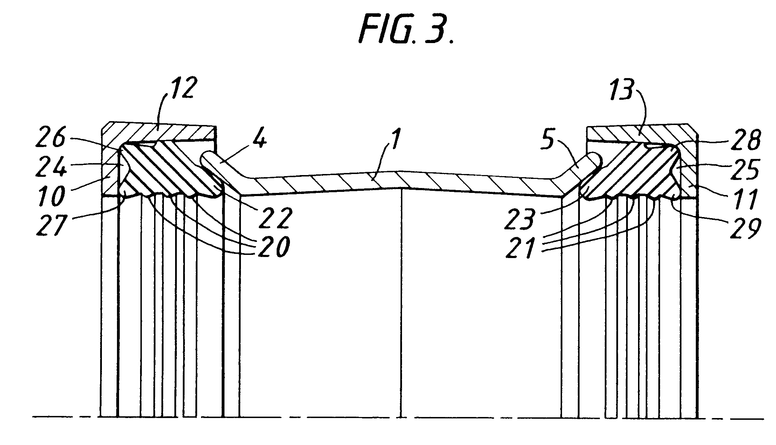

It is to be observed, particularly from Figures 2 and 3, that the collar portion 12,13 of the flanges 8,9 is at a diameter which closely follows the radially outer diameter of the sealing gasket 6,7 when the latter is fitted upon the large pipe 2, the collar portion 12,13 being interrupted at this diameter at the radially outward extensions 15,19 of the skirt portion 10,11 within which are located the apertures 16 for the tightening bolts 14. It is also to be observed, from Figures 1 and 2 that at such outward extensions 15,19 of the skirt portion 10,11, the collar portion turns around, in a partially circular disposition when viewed in front elevation, the radial extensions 15,19 of the skirt portion 10,11.

Each of the sealing gaskets 6,7 is provided with three pipe sealing ribs 20,21 on its radially inward face for enhancing sealing engagement when compressed about the pipes 2,3, and is provided also with an inclined nose 22,23 generally compatible with the inclined ends 4,5 of the sleeve member 1.

The axially outer wall of each of the sealing gaskets is provided with a radially centrally groove 24,25 of V-shape so as to provide an axially outer wall of generally blunt "fishtail" configuration having two radially separate axially outward protrusions 26,27 and 28,29. As can be seen from figure 1, whilst with the large pipe 2 both portions 26,27 of the axially outer wall of the sealing gasket 6 separated by the central groove 24 are abutted by the skirt portion 10 of the compression flange, with the small pipe 3 only the radially outer portion 28 of the axially outer wall of the sealing gasket 7 is abutted by the skirt portion of the flange.

For use, the pipe coupling is disposed in a loosely coupled configuration, and the two pipes 2,3 inserted one into each end. Thereafter the nuts 18 are tightened upon the bolts 14 so as to compress, by means of the skirt portions 10,11 of the compression flanges 8,9, the gaskets 6,7 into sealing engagement between the inclined ends 4,5 of the sleeve 1 and the outer peripheral walls of the pipes 2,3. In addition this compression has the effect, apart from at the location of the bolts 14, of squeezing each of the sealing gaskets 6,7 radially outwardly into engagement with the inner surface of the collar portion 12,13 of the flange, and (at the large pipe) flattening the "fishtail" protrusions 26,27 axially to grovide full overall engagement of the axially outer wall of the gasket with the axially inner surface of the skirt portion 10 of the flange 6.

The configuration of gasket is, so far as the small pipe is concerned, of considerable importance and advantage. During assembly of a coupling of the previous kind referred to above on a bottom of tolerance diameter pipe, particularly if the coupling becomes offset to the axis of the pipe, an excessive gap between flange and pipe can be such as to enable the gasket to extrude therebetween and cause sealing failure of the joint. However, with the arrangement illustrated, during initial tightening up, the gasket 7 flattens and extends into all adjacent portions of the compression flange 9 and has the effect of centralising the pipe within the flange 9 so as to reduce the gap between the inner diameter of the skirt portion 11 of the compression flange 9 and the outer peripheral surface of the pipe 3. On further tightening of the coupling, the radially inner portion 29 of the "fishtail" shaped axially end wall of the gasket protrudes into the annular gap between the pipe and the skirt portion of the flange providing additional sealing therebetween and offering further centralising support for the pipes within the compression flange 9.

The compression flange 8,9 of the coupling of the invention as illustrated is of lower overall diameter compared to compression flanges of previous similar couplings, so that it can be of reduced weight, whilst still maintaining full strength since the axially extending collar extends fully therearound, as with previous couplings of this kind.

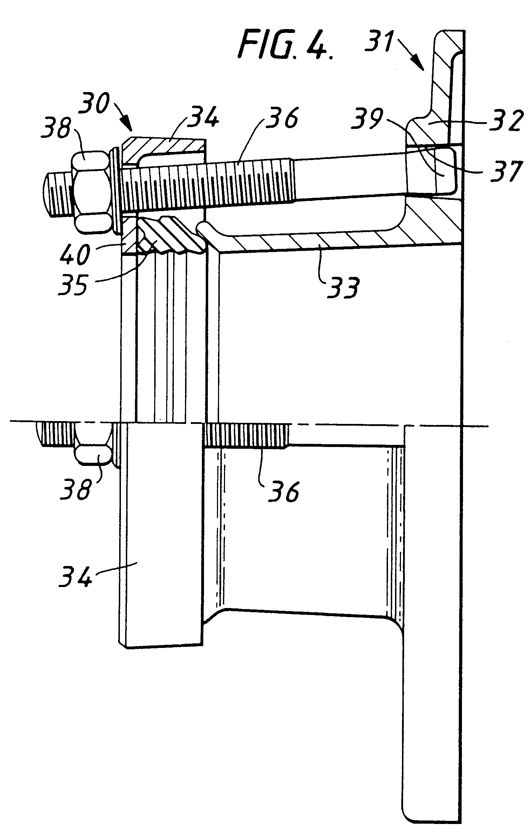

Figure 4 illustrates an embodiment of the invention in which one end 30 thereof essentially comprises any one half of the coupling of figure 4, but in which the other end 31 includes a radially outwardly annular extending continuation of the sleeve member 33 of the coupling constituting an annular coupling flange 32 for connection to a flanged pipe in the usual way by means of bolts and an interplaced gasket (not shown). In this case a compression flange 34 corresponding exactly to the compression flanges of figure 1 is tightenable against a sealing gasket 35, again corresponding exactly to the gaskets of figure 1, by means of a plurality of bolts 36 having heads 39 engaging in tapered rectangular section bores 37 (to prevent rotation) in the coupling flange 32 and having at the axially outer end of the compression flange 34 tightenable nuts 38.

It is to be observed that due to the necessity to maintain a minimum sealing gasket area on the rear face of the coupling gasket 32 radially inwards of the bolt aperture 37, the head 39 of the bolt 36 within the coupling flange 32 is at a greater diameter than the nut end of the bolt 36 within the compression flange 34, so that the bolts 36 are inclined to the axis of the coupling. By this arrangement, tightening forces can be made to apply primarily to the skirt portion 40 of the flange 34, avoiding the previously mentioned problem of tightening forces applying on the radially outermost portions of flanges of known form.

## Claims

1. A pipe coupling comprising an annular sleeve member (1,33) arranged in use at at least a free end thereof to overlie an end of a plain ended pipe (2,3) to be connected by the coupling; an annular sealing gasket (6,7,35) disposed at the free end of the sleeve member (1,33) and arranged in use to be compressed and seal between the inner wall of the sleeve (1,33) and the outer peripheral wall of the pipe (2,3) to be connected; an annular compression flange (8,9,34) disposed at the free end of the sleeve member, the flange (8,9,34) including a radially inwardly extending skirt portion (10,11,40) arranged to abut on its axially inner wall against an axially outer face of the sealing gasket (6,7,35), and an axially inwardly extending collar portion (12,13,34) running around the flange (8,9,34) radially outwardly of the skirt portion (10,11,40) so as to lie, on its radially inner wall, at an adjacent disposition to a radially outer face of the sealing gasket (6,7,35) over the majority of its circumference, the skirt portion (10,11,40) having a plurality of radially outward extensions (15,19) spaced therearound, and tightening means (14,18,36,38) connecting to the radially outward extensions (15,19) of the skirt portion for compressing, in use, the sealing gasket (6,7,35) between the sleeve member (1,33) and the pipe (2,3) to be connected, the tightening means (14,18,36,38) being disposed at the plurality of radially outward extensions (15,19) of the skirt portion (10,11,40), characterised in that the adjacent disposition of the collar portion (12,13,34) and the sealing gasket (6,7,35) is interrupted at the radially outward extensions (15,19) of the skirt portion (10,11,40); and in that the tightening means at the plurality of radially outward extensions of the skirt portion are disposed adjacent to the radially outer face of the sealing gasket (6,7,35).

2. A pipe coupling as claimed in Claim 1 characterised in that the axially extending collar portion (12,13,34) of the compression flange (8,9,34) is arranged to turn around the radially outward extensions (15,19) of the skirt portion (10,11,40), such that the tightening means (14,18,36,38) are disposed radially within the collar portion (12,13,34) at their connection with the skirt portion extensions (15,19).

3. A pipe coupling as claimed in Claim 2 characterised in that the collar portion (12,13,34) turns around the radially outward extensions (15,19) of the skirt portion (10,11,40) in a generally partially circular disposition when viewed in front elevation.

4. A pipe coupling as claimed in any one of the preceding claims characterized in that the tightening means comprise bolts (14,36) and nuts (18,38).

5. A pipe coupling as claimed in any one of the preceding claims the free end (4,5) of the sleeve member (1,33) is inclined radially outwardly.

6. A coupling as claimed in any one of the preceding claims provided for connecting two abutting plain ended pipes (2,3), and characterised by compression flanges (8,9) and sealing gaskets (6,7) at each end of the sleeve member (1), the tightening means (14,18) connecting between the two compression flanges (8,9).

7. A coupling for pipes as claimed in any one of the preceding claims characterised in that said sealing gasket at each end is provided on its axially outer wall with an annular groove (24,25) part way along its radial width, whereby in use with a pipe of small diameter in the tolerance range therefor, the radially outer portion (26,28) of the axially outer rear wall of the gasket (6,7,35) only is engaged by the skirt portion (10,11) of the flange (8,9,34) during tightening of the flange (8,9,34) and compression of the gasket (6,7,35) between the inner surface of the sleeve (1,33) and the outer periphery of the pipe (2,3).

8. A coupling as claimed in Claim 7 characterised in that the groove (24,25) in the axially outer wall of the sealing gasket (6,7,35) is of a V-shape configuration whereby in section the axially outer wall of the gasket (6,7,35) is of generally fishtail configuration.

## Patentansprüche

1. Rohrkupplung umfassend ein im Gebrauch an mindestens einem freien Ende davon so angeordnetes ringförmiges Hülsenelement (1, 33), daß es ein Ende eines durch die Kupplung anzuschließenden Glattrohrs (2, 3) überdeckt, eine ringförmige, am freien Ende des Hülsenelements (1, 33) befindliche und im Gebrauch so angeordnete Dichtung (6, 7, 35), daß sie zusammengedrückt wird und zwischen der inneren Wand der Hülse (1, 33) und der äußeren peripherischen Wand des anzuschließenden Rohrs (2, 3) abdichtet, einen am freien Ende des Hülsenelements befindlichen, ringförmigen Verschraubungsflansch (8, 9, 34), wobei der Flansch (8, 9, 34) einen sich radial nach innen erstreckenden Randabschnitt (10, 11, 40), der im Gebrauch so angeordnet ist, daß er an seiner axial inneren Wand an eine axial äußere Außenfläche der Dichtung (6, 7, 35) anstößt, und einen vom Randabschnitt (10, 11, 40) um den Flansch (8, 9, 34) herum radial nach außen verlaufenden, sich axial nach innen erstreckenden Ringabschnitt (12, 13, 34), so daß er auf dem größten Teil seines Umfangs an seiner radial inneren Wand an einer radial äußeren Außenfläche der Dichtung (6, 7, 35) angrenzenden Lage liegt, wobei der Randabschnitt (10, 11, 40) eine Vielzahl von darum herum angeordneten, radial sich nach außen erstreckenden Verlängerungen (15, 19) hat, und Spannmittel (14, 18, 36, 38) umfaßt, die mit den sich radial nach außen erstreckenden Verlängerungen (15, 19) des Randabschnitts verbunden werden, um die Dichtung (6, 7, 35) in Gebrauch zwischen dem Hülsenelement (1, 33) und dem anzuschließenden Rohr (2, 3) zusammenzudrücken, wobei die Spannmittel (14, 18, 36, 38) an der Vielzahl von sich radial nach außen erstreckenden Verlängerungen (15, 19) des Randabschnitts (10, 11, 40) angeordnet sind, dadurch gekennzeichnet, daß die angrenzende Lage des Ringabschnitts (12, 13, 34) und der Dichtung (6, 7, 35) an den sich radial nach außen erstreckenden Verlängerungen (15, 19) des Randabschnitts (10, 11, 40) unterbrochen ist und daß die Spannmittel an der Vielzahl der sich radial nach außen erstreckenden Verlängerungen des Randabschnitts angrenzend an die radial äußere Außenfläche der Dichtung (6, 7, 35) angeordnet sind.

2. Rohrkupplung nach Anspruch 1, dadurch gekennzeichnet, daß der sich axial erstreckende Ringabschnitt (12, 13, 34) des Verschraubungsflansches (8, 9, 34) so angeordnet ist, daß er sich um die radial nach außen erstreckenden Verlängerungen (15, 19) des Randabschnitts (10, 11, 40) herum dreht, so daß die Spannmittel (14, 18, 36, 38) an ihrer Verbindung mit den Randabschnittsverlängerungen (15, 19) radial innerhalb des Ringabschnitts (12, 13, 34) angeordnet sind.

3. Rohrkupplung nach Anspruch 2, dadurch gekennzeichnet, daß sich der Ringabschnitt (12, 13, 34), wenn im Aufriß betrachtet, in einer allgemein teilweise kreisförmigen Anordnung um die sich radial nach außen erstreckenden Verlängerungen (15, 19) des Randabschnitts (10, 11, 40) herum dreht.

4. Rohrkupplung nach einem der vorangehenden Ansprüche, dadurch gekennzeichnet, daß die Spannmittel Schrauben (14, 36) und Muttern (18, 38) umfassen.

5. Rohrkupplung nach einem der vorangehenden Ansprüche, wobei das freie Ende (4, 5) des Hülsenelements (1, 33) radial nach außen geneigt ist.

6. Kupplung nach einem der vorangehenden Ansprüche, vorgesehen zum Verbinden zweier aneinanderstoßender Glattrohre (2, 3) und durch Schraubflansche (8, 9) und Dichtungen (6,7) an jedem Ende des Hülsenelements (1) gekennzeichnet, wobei die Spannmittel (14, 18) die zwei Verschraubungsflansche (8, 9) verbinden.

7. Kupplung für Rohre nach einem der vorangehenden Ansprüche, dadurch gekennzeichnet, daß die genannte Dichtung an jedem Ende an ihrer axial äußeren Wand teilweise entlang ihrer radialen Breite mit einer ringförmigen Rille (24, 25) versehen ist, wobei deshalb im Gebrauch mit einem Rohr kleineren Durchmessers im Toleranzbereich während des Anziehens des Flansches (8, 9, 34) und des Zusammendrückens der Dichtung (6, 7, 35) zwischen der inneren Oberfläche der Hülse (1, 33) und dem äußeren Umfang des Rohres (2, 3) nur der radial äußere Abschnitt (26, 28) der axial äußeren Rückwand der Dichtung (6, 7, 35) mit dem Randabschnitt (10, 11) des Flanschs (8, 9, 34) in Eingriff kommt.

8. Kupplung nach Anspruch 7, dadurch gekennzeichnet, daß die Rille (24, 25) in der axial äußeren Wand der Dichtung (6, 7, 35) eine V-förmige Konfiguration hat, wodurch die axial äußere Wand der Dichtung (6, 7, 35) im Querschnitt eine allgemein fischschwanzförmige Konfiguration hat.

## Revendications

1. Un raccord de tuyau comportant un manchon annulaire (1, 33) agencé, en utilisation, à l'une au moins de ses extrémités libres, de façon à chevaucher une extrémité d'un tuyau à extrémité lisse (2, 3) pour être raccordé par le raccord ; une garniture d'étanchéité annulaire (6, 7, 35) disposée à l'extrémité libre du manchon (1, 33) et agencée en utilisation de façon a être comprimée et à assurer l'étanchéité entre la paroi interne du manchon (1, 33) et la paroi périphérique externe du tuyau (2, 3) à raccorder ; une bride de compression annulaire (8, 9, 34) disposée à l'extrémité libre du manchon, la bride (8, 9, 34) comprenant une portion jupe se prolongeant vers l'intérieur dans le sens radial (10, 11, 40), agencée de façon à abouter, sur sa paroi interne axiale, contre une face externe axiale de la garniture d'étanchéité (6, 7, 35) ainsi qu'une portion collier se prolongeant vers l'intérieur dans le sens axial (12, 13, 34), faisant le pourtour de la bride (8, 9, 34) allant vers l'extérieur dans le sens radial de la portion jupe (10, 11, 40), de manière à se trouver, sur sa paroi interne radiale, à une position adjacente à une face externe radiale de la garniture d'étanchéité (6, 7, 35) sur la majorité de sa circonférence, la portion jupe (10, 11, 40) ayant une pluralité de prolongements vers l'extérieur dans le sens radial (15, 19) espacés sur ce périmètre, et des dispositifs de serrage (14, 18, 36, 38) reliés aux prolongements vers l'extérieur dans le sens radial (15, 19) de la portion jupe afin de comprimer, en utilisation, la garniture d'étanchéité (6, 7, 35) entre le manchon (1, 33) et le tuyau (2, 3) à raccorder, les dispositifs de serrage (14, 18, 36, 38) étant disposés au niveau de la pluralité des prolongements vers l'extérieur dans le sens radial (15, 19) de la portion jupe (10, 11, 40), caractérisé en ce que la disposition adjacente de la portion collier (12, 13, 34) et de la garniture d'étanchéité (6, 7, 35) est interrompue au niveau des prolongements vers l'extérieur dans le sens radial (15, 19) de la portion jupe (10, 11, 40), et en ce que les dispositifs de serrage au niveau de la pluralité des prolongements vers l'extérieur dans le sens radial de la portion jupe sont disposés de façon adjacente par rapport à la face externe radiale de la garniture d'étanchéité (6, 7, 35).

2. Un raccord de tuyau, selon les stipulations de la revendication 1, caractérisé en ce que la portion collier se prolongeant dans le sens axial (12, 13, 34) de la bride de compression (8, 9, 34) est agencée de façon à tourner autour des prolongements vers l'extérieur dans le sens radial (15, 19) de la portion jupe (10, 11, 40) de telle sorte que les dispositifs de serrage (14, 18, 36, 38) soient disposés dans le sens radial dans la portion collier (12, 13, 34) au niveau de leur branchement avec les prolongements de la portion jupe (15, 19).

3. Un raccord de tuyau, selon les stipulations de la revendication 2, caractérisé en ce que la portion collier (12, 13, 34) tourne autour des prolongements vers l'extérieur dans le sens radial (15, 19) de la portion jupe (10, 11, 40) selon une disposition partiellement circulaire, en général, lorsqu'on la regarde de face.

4. Un raccord de tuyau, selon les stipulations de l'une quelconque des revendications précédentes, caractérisé en ce que les dispositifs de serrage comprennent des boulons (14, 36) et des écrous (18, 38).

5. Un raccord de tuyau, selon les stipulations de l'une quelconque des revendications précédentes, l'extrémité libre (4, 5) du manchon (1, 33) est inclinée vers l'extérieur dans le sens radial.

6. Un raccord, selon les stipulations de l'une quelconque des revendications précédentes, prévu pour raccorder deux tuyaux à extrémité lisse aboutés l'un contre l'autre (2, 3) et caractérisé par des brides de compression (8, 9) et des garnitures d'étanchéité (6, 7) sur chaque extrémité du manchon (1), les dispositifs de serrage (14, 18) assurant le branchement entre les deux brides de compression (8, 9).

7. Un raccord pour tuyaux, selon les stipulations de l'une quelconque des revendications précédentes, caractérisé en ce que ladite garniture d'étanchéité à chaque extrémité est munie sur sa paroi externe axiale d'une rainure annulaire (24, 25) montée à une certaine distance le long de sa largeur radiale, cas dans lequel, en utilisation avec un tuyau de faible diamètre dans la plage de tolérances de celui-ci, la portion externe radiale (26, 28) de la paroi arrière externe axiale de la garniture (6, 7, 35) est seulement emboîtée par la portion jupe (10, 11) de la bride (8, 9, 34) pendant le serrage de la bride (8, 9, 34) et la compression de la garniture (6, 7, 35) entre la surface interne du manchon (1, 33) et la péripérie externe du tuyau (2, 3).

8. Un raccord, selon les stipulations de la revendication 7, caractérisé en ce que la rainure (24, 25) dans la paroi externe axiale de la garniture d'étanchéité (6, 7, 35) possède une configuration en forme de V, cas dans lequel, vue en coupe, la paroi externe axiale de la garniture (6, 7, 35) possède une configuration générale en queue de poisson.
